# EUROPEAN PATENT SPECIFICATION

(11) **EP 0 719 950 B1**
(45) Date of publication and mention of the grant of the patent: **21.03.2001**
(21) Application number: 95308428.2
(22) Date of filing: 23.11.1995
(51) Int. Cl.: F15B 13/04

(54) **Poppet type directional control valve**
Sitzwegeventil
Distributeur à clapet

(30) Priority: 29.12.1994 JP 33964094
(43) Date of publication of application: 03.07.1996
(73) Proprietor: SMC CORPORATION, Minato-ku Tokyo 105 (JP)
(72) Inventor: Sato, Hideharu, c/o SMC Corp. Tsukuba Techn. Ctr., Tsukuba-gun, Ibaraki (JP)
(74) Representative: Allam, Peter Clerk

(56) References cited:
- EP-A- 0 412 871
- EP-A- 0 500 162
- DE-A- 3 443 078
- DE-A- 3 534 387
- DE-U- 8 817 151
- DE-U- 9 002 680
- FR-A- 2 681 397

## Description

The present invention relates to a poppet type directional control valve driven by pilot pressure.

A poppet type directional control valve is already known, which comprises a supply port for pressure fluid opened to a valve bore where a valve disc is to be inserted, an output port opened to said valve bore and with communication to said supply port being blocked when the valve disc is switched over, a discharge port opened to said valve bore and being communicated with the output port when the communication between the supply port and the output port is blocked, and a pilot port opened to a pilot chamber at one end of the valve bore, whereby a first valve seat and a second valve seat are provided between the supply port and the output port and between the output port and the discharge port respectively in said valve bore, there are provided a valve body integrated with these valve seats and a poppet type valve disc to be inserted into said valve bore to open and close the first and the second valve seats, said valve disc is switched over by pilot fluid pressure supplied from or discharged to the pilot chamber, and the first and the second valve seats are opened or closed by the pilot fluid pressure.

In the directional control valve already known as described above a valve disc is designed as a poppet type sealing member for opening and closing valve seats mounted on a flange, which is usually formed by cutting a valve rod or fitting on it.

However, the above directional control valve is disadvantageous in that the arrangement and the assembling of valve body and valve disc are not very easy and simple. The flange has to be manufactured by cutting the valve rod or fitting on the valve rod, and this results in much labour and cost in the manufacture. Because the diameter of the poppet type sealing member is larger than the diameter of the valve seat in the valve body, the insertion of the valve disc into or assembling on the valve bore are very troublesome. Further, the piston for switching over and driving the valve disc must be airtightly inserted in the pilot chamber, and this means the increase in the number of processes in the assembling procedure.

DE 3534387 discloses a poppet valve having a main housing including a longitudinal bore. Two sleeves are provided within the longitudinal bore, and two cartridge valves are located in the longitudinal bore in axially opposite relationship. Each of the cartridge valves includes a spool, the spool having a diameter such that it hermetically seals with the associated sleeve within which the spool is provided. The longitudinal bore of the main housing is further provided with a pair of valve seats. A sealing member is provided in association with each of the cartridge valves and is arranged to seal the associated valve seat. In a preferred embodiment disclosed in the prior art, the spools are mechanically connected, such that the movement of one spool causes a corresponding movement in the other spool. The valve is arranged such that a source port, an outlet port and a discharge port all open into the longitudinal bore. The cartridge valves are arranged to allow communication between either the supply port and the outlet port, or between the outlet port and the discharge port.

The poppet type directional control valve according to the invention comprises a supply port for pressure fluid opened to a valve bore where a valve disc is inserted, an output port opened to said valve bore and with communication to said supply port blocked by switchover operation of the valve disc, a discharge port opened to said valve bore and being communicated with the output port when communication between said supply port and said output port is blocked, and a pilot port opened to pilot chamber at one end of said valve bore, whereby a first valve seat and a second valve seat are provided between the supply port and the output port and between the output port and the discharge port in said valve bore, and these components are integrated as a valve body;
in which the valve disc is a poppet type valve disc inserted into said valve bore and used for opening and closing the first valve seat and the second valve seat, and said valve disc is switched over and driven by pilot fluid pressure supplied from or discharged to the pilot chamber to open or close the first valve seat and the second valve seat;
the valve bore of said valve body comprises a first valve bore formed from one end in axial direction of the valve body via an opening of the supply port toward the first valve seat, a second valve bore formed from the other end in axial direction of the valve body via the pilot chamber and an opening of the discharge port toward the second valve seat, and a communicating valve bore located between the first valve seat and the second valve seat positioned back-to-back to each other, formed from the first valve bore and the second valve bore via the opening of the output port and for communicating these valve bores;
said poppet type valve disc comprises a first valve disc inserted into the first valve bore and used for opening and closing the first valve seat and a second valve disc inserted through the second valve bore and connected integrally with the first valve disc to open or close the second valve seat, characterised in that:

the first and second valve discs are made of a material having elasticity and sealing property, each of the valve discs being moulded integrally;
in that said pilot chamber is formed between the second valve disc airtightly inserted into the second valve bore and a closing member for closing an opening of the second valve bore;
in that the first valve bore is formed without the diameter being enlarged from the one end of the valve body towards the first seat;
in that the second valve bore is formed without the diameter being enlarged from the other end of the valve body towards the second seat;
in that the communicating valve bore is formed without the diameter being enlarged in a direction from the first valve seat towards the second valve seat;
in that the inner diameter D1 of the second valve bore is greater than the diameter D2 of the first valve seat;
in that the diameter D2 of the first valve seat is greater than the diameter D3 of the second valve seat; and,
in that the valve discs co-operate directly with the valve bore and the valve seats integrated therein.

The present invention provides a poppet type directional control valve, in which it is possible to mould the valve body and to mould and assemble the valve disc in simple and easy manner and to manufacture these components at low cost.

The poppet type valve disc may have a very simple arrangement and there is no need to mount a poppet type sealing member on a flange formed by cutting a valve rod or by fitting on it.

The present invention allows the number of processes in the assembling procedure to be reduced and there is no need to airtightly insert a piston for switching over and driving the valve disc into a pilot chamber.

In the poppet type directional control valve as described above, a guide for guiding the second valve disc to move in the second valve bore can be integrally provided on the second valve bore or the second valve disc, and the closing member for closing the opening of the second valve bore can be formed as a manual operating member for switching over and driving the valve disc by pressure from outside. Further, in order to introduce output of a small size solenoid valve into the pilot port and to utilise output of the poppet type directional control valve as pilot fluid for driving a main valve having large capacity, a supply port, an output port and a discharge port for pressure fluid are opened on a main valve mounting surface on one side of the valve body, and a supply hole and a discharge hole directly communicated with the supply port and the discharge port respectively and a pilot port communicated with the pilot chamber are formed on a solenoid valve mounting surface on the opposite side.

In the poppet type directional control valve with the above arrangement, when the pilot fluid is supplied to or discharged from the pilot chamber, the first valve disc and the second valve disc are integrally moved in the valve bore by the pilot fluid pressure applied on the second valve disc. Thus, it is possible to switch over the communication between the output port or the supply port and the discharge port. In this case, the second valve disc is moved in the second valve bore as it is guided by a guide provided on the second valve bore or on the valve disc itself. Thus, the valve disc can be switched over and driven in stable manner.

When the manual operating member is pushed from outside the valve body, the valve disc is integrally moved, and this makes it possible to switch over the communication between the ports by manual operation.

In the poppet type directional control valve as described above, the valve bore of the valve body comprises a first valve bore formed from one end in axial direction toward the first valve seat, a second valve bore formed from the other end in axial direction via the pilot chamber toward the second valve seat, and a communicating valve bore located between the first valve seat and the second valve seat, formed from the first valve bore and the second valve bore and used for communicating the first and the second valve bores with each other. Accordingly, the valve bores on the valve body can be easily formed, and the valve disc can be easily inserted from both ends in axial direction. Thus, the poppet type valve disc can be easily assembled after formation of the valve body.

In the directional control valve of the present invention, the first valve disc is inserted into the first valve bore from one end in axial direction and the second valve disc is inserted into the second valve bore from the other end and these valve discs are connected at intermediate portion, and there is no need to mount a poppet type sealing member on a flange, which is formed by cutting a valve rod or fitting on it. Thus, the valve discs can be molded in simple and easy manner and can be produced at low cost. Moreover, there is no need to insert the piston for switching over and driving the valve disc separately into the pilot chamber, and this makes it possible to reduce the number of processes in the assembling procedure.

Further, the supply port, the output port and the discharge port are provided on a main valve mounting surface on one side of the valve body, and a supply hole and a discharge hole directly communicated with the supply port and the discharge port respectively and a pilot port communicated with the pilot chamber are provided on a solenoid valve mounting surface on the opposite side. As this poppet type directional control valve is used as a valve for amplifying the pilot fluid, compared with a small size pilot solenoid valve mounted on the solenoid valve mounting surface, it is much easier to connect valves in case pressure fluid is directly supplied from or discharged to the main valve via the valve body, and it is possible to introduce the output of the small size pilot solenoid valve into the pilot port and to use it as a pilot valve for driving the main valve of large capacity.

Examples of a poppet type directional control valve in accordance with the present invention will be described with reference to the accompanying drawings, in which:
Fig. 1 is a longitudinal sectional view of an embodiment of a poppet type directional control valve of the present invention where different switchover conditions are shown on the right half and the left half of a valve disc;
Fig. 2 is a cross-sectional view along the line X-X in Fig. 1;
Fig. 3 is a cross-sectional view along the line Y-Y in Fig. 1;
Fig. 4 is a longitudinal sectional view of a second embodiment of the present invention showing different switchover conditions on the right half and the left half of a valve disc;
Fig. 5 is a longitudinal sectional view of a third embodiment of the present invention showing different switchover conditions on the right half and the left half of a valve disc;
Fig. 6 is a longitudinal sectional view of a directional control valve of the first embodiment in operating condition; and
Fig. 7 is a block diagram showing an arrangement of the pilot type valve of Fig. 6 by symbol marks.

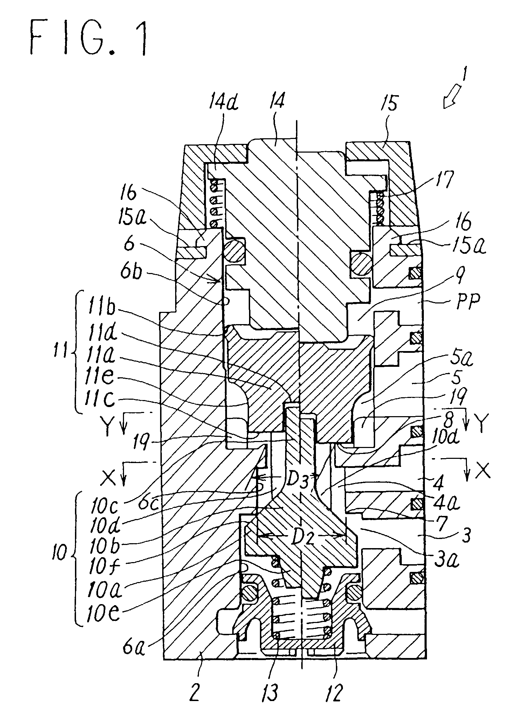

Fig. 1 represents a first embodiment of a poppet type directional control valve according to the present invention, where a valve body 2 of a directional control valve 1 comprises a supply port 3 for pressure fluid opened to a valve bore 6, into which a valve disc is inserted, an output port 4 opened to said valve bore 6 and with communication to said supply port blocked by switchover operation of the valve disc, a discharge port 5 opened to said valve bore 6 and communicated with said output port 4 when communication between said supply port 3 and said output port 4 is blocked, and a pilot port PP opened to a pilot chamber 9 on one end of said valve bore 6, whereby there are further provided a first valve seat 7 and a second valve seat 8 between the supply port 3 and the output port 4 and between the output port 4 and the discharge port 5 in said valve bore 6. These components are made of hard synthetic resin or aluminum and are integrally molded.

The valve bore 6 comprises a first valve bore 6a from one end in axial direction (the lower end in Fig. 1) to a portion closer to the first valve seat 7 through an opening 3a of the supply port 3, a second valve bore 6b formed from the other end in axial direction to the second valve seat 8 through the pilot chamber 9 and an opening 5a of the discharge port 5, and a communicating valve bore 6c located between the first valve seat 7 and the second valve seat 8 positioned back-to-back to each other, being formed from the first valve bore 6a through an opening 4a of the output port 4 and communicating these valve bores 6a and 6b with each other.

To facilitate the formation of the valve body 2 by mold, diameter of the first valve bore 6a is at least not enlarged from the opening at one end in axial direction toward the first valve seat 7 and is gradually reduced in general, and the communicating valve bore 6c is gradually reduced in diameter and is connected with the valve bore 6a. On the other hand, the second valve bore 6b is also gradually reduced in diameter in general from the opening toward the second valve seat 8 at least not being enlarged in diameter.

In this case, the inner diameter D1 of the second valve bore 6b in the pilot chamber 9 is designed larger than the diameter D2 of the first valve seat 7 and the diameter D3 of the second valve seat 8, and the diameter D2 of the first valve seat 7 is designed larger than the diameter D3 of the second valve seat 8.

However, the communicating valve bore 6c may be connected so that it is gradually reduced in diameter from tip of the second valve bore 6b. In this case, the diameter D3 of the second valve seat 8 is designed larger than the diameter D2 of the first valve seat 7.

A poppet type first valve disc 10 slidably inserted into the valve bore 6a from its opening comprises a cylindrical portion 10a freely inserted into the first valve bore 6a, a conical portion 10b forming a sealing surface 10f to open or close the first valve seat 7 by touching or separated from it, a projection 10c protruding into the second valve bore 6b from the conical portion 10b through the communicating valve bore 6c, a plurality of ribs 10d in axial direction formed on outer periphery except the tip of the projection, and a valve spring retainer 10e protruding to the side opposite to the projection 10c.

On the other hand, a poppet type second valve disc 11 slidably inserted into the second valve bore 6b from its opening comprises an annular sealing surface 11c for opening and closing the second valve seat 8, a main unit 11a having a recess 11d for joining at its center and a curved recess 11e for enlarging flow passage and formed on outer periphery of the sealing surface 11c, and a seal lip 11b provided on outer periphery on the opposite side and air-tightly contacting the second valve bore 6a.

The first valve disc 10 and the second valve disc 11 are made of a material having elasticity and sealing property such as synthetic rubber and are separately molded as integral units respectively.

The opening of the first valve bore 6a is airtightly closed by a spring seat 12, which serves as a closing member, and a valve spring 13 for pushing a sealing surface 10f of the first valve disc 10 against the first valve seat 7 is placed in contracted form between the spring seat 12 and the valve spring retainer 10e of the first valve disc 10.

Into the opening of the second valve bore 6b, a manual operating member 14 capable to push the second valve disc 11 by manual operation is airtightly and slidably inserted to define the pilot chamber 9 between the manual operating member and the second valve disc 11. A return spring 17 is placed in contracted form between a flange 14a on the manual operating member 14 and the valve body 2. On the valve body 2, a cover 15 is placed to restrict protrusion of the manual operating member 14 from the second valve bore 6b as it is brought into contact with the flange 14a of the manual operating member 14. A plurality of engaging projections 16 for locking the cover 15 are protruded on outer peripheral surface of the valve body 2, and engaging holes 15a on the cover 15 is engaged with the engaging projections 16 to mount the cover 15 on the valve body 2.

In case the manual operating member 14 is not needed, the opening of the second valve bore 6b may be closed by the closing member, which is designed similarly to the spring seat 12 of the first valve bore 6a.

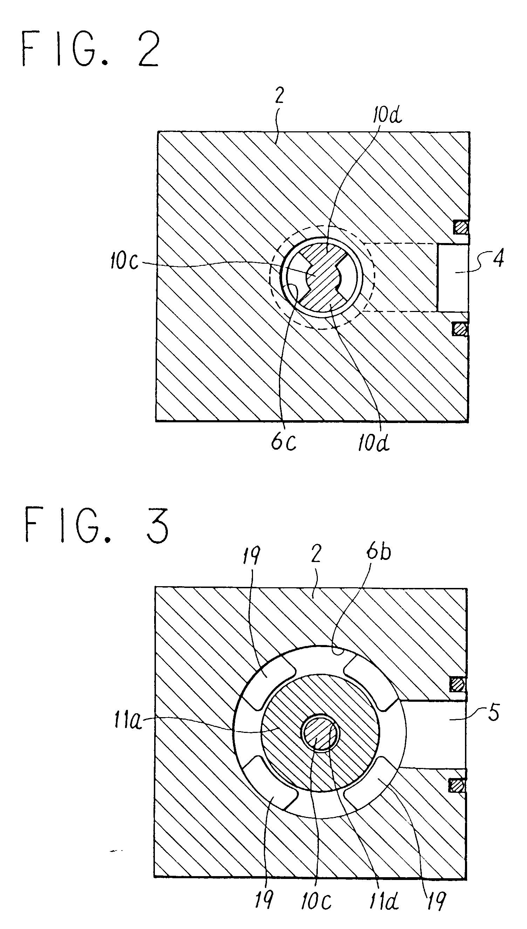

As it is evident from Fig. 1 and Fig. 2, a plurality of ribs 10d on the first valve disc 10 form flow passages of pressure fluid between and around themselves and also define insertion limit of the projection 10c of the first valve disc 10 inserted into the recess 11d of the second valve disc 11.

As shown in Fig. 1 and Fig. 3, the second valve disc 11 is guided to slide by rib-like guides 19 provided around the second valve seat 8 in the second valve bore 6b, and flow passages of pressure fluid are enlarged between a plurality of guides 19.

The first valve disc 10 and the second valve disc 11 are centered by inserting the projection 10c of the first valve disc 10 into the recess 11d of the second valve disc 11.

The valve body 2 of the poppet type directional control valve having the above arrangement can be integrally molded from a material such as plastics or light alloy by placing cores for forming the first valve bore 6a, the second valve bore 6b and the communicating valve bore 6c into a mold and further by inserting cores for forming the ports into molds. Because the first valve bore 6a and the communicating valve bore 6c are reduced in diameter toward the second valve seat 8 and the second valve bore 6b is designed in approximately cylindrical shape, these cores can be easily removed after molding. Therefore, the valve body 2 can be easily molded.

From the openings of the first valve bore 6a and the second valve bore 6b formed on the valve body 2, the first valve disc 10 and the valve spring 13 as well as the second valve disc 11 and the manual operating member 14 with the return spring 17 are inserted. By closing the openings of the two valve bores by the spring seat 12 and the cover 15, these components can be assembled on the valve body 2. In this case, the first valve disc 10 and the second valve disc 11 can be separately inserted into the first valve bore 6a and the second valve bore 6b, and these valve discs can be easily assembled into the valve bore 6.

Because the first valve disc 10 and the second valve disc 11 are molded from the material having elasticity and sealing property and these are connected together, there is no need to engage the sealing member into the valve disc or to provide a valve rod to integrally move these valve discs, and this contributes to easy assembling at low cost.

Describing now the operation of the poppet type directional control valve in detail, when the pilot air pressure in the pilot chamber 9 is exhausted, the first valve disc 10 closes the first valve seat 7 by resilient force of the valve spring 13 as shown in the left half of Fig. 1, and, being pushed by the rib 10c, the second valve disc 11 integrally moving with it opens the second valve seat 8. As a result, the communication between the supply port 3 and the output port 4 is blocked, and the output port 4 and the discharge port 5 are communicated with each other.

When the pilot air pressure is supplied to the pilot chamber 9, the second valve disc 11 pushed by the pilot air pressure closes the second valve seat 8, and the first valve disc 10 opens the first valve seat 7. As a result, the supply port 3 and the output port 4 are communicated with each other, while the communication between the output port 4 and the discharge port 5 is blocked. Therefore, compressed air in the supply port 3 is issued from the output port 4.

When the manual operating member 14 is pushed with the communication between the supply port 3 and the output port 4 blocked as shown in the left half of Fig. 1, it is turned to the same switchover status as the case where the pilot air pressure is supplied as shown in the right half of Fig. 1. Therefore, in case the pilot fluid pressure is lost from some reason, the directional control valve 1 can be operated manually.

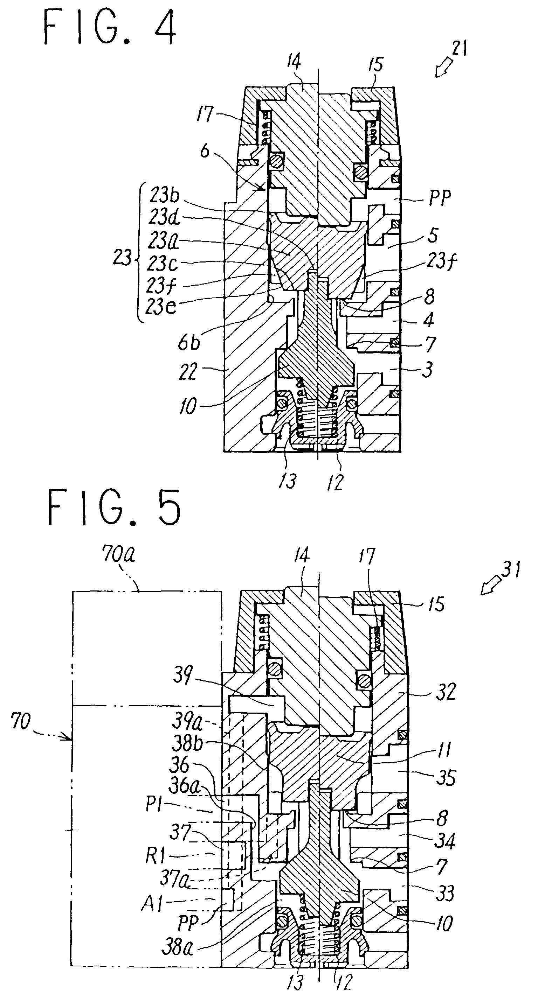

Fig. 4 represents a second embodiment of the present invention where a valve body 22 in a directional control valve 21 of the second embodiment is not equipped with the guide 19 as provided in the second valve bore 6b of the first embodiment. In this respect, a poppet type second valve disc 23 for opening and closing the second valve seat 8 comprises an annular sealing surface 23c, a recess 23d for joining at its center, a curved recess 23e for enlarging flow passage formed on outer periphery of the sealing surface 23c and a main unit 23a having a plurality of rib-like guides 23f protruded to be guided along inner surface of the second valve bore 6b in the curved recess 23e, and an annular seal lip 23b airtightly and slidably moved along inner surface of the second valve bore 6a.

The arrangement and the operation of the second embodiment are the same as those of the first embodiment except that the sliding of the second valve disc 23 is guided to slide by a guide 23d. Therefore, the same component as in the first embodiment is referred by the same symbol, and detailed description is not given here.

Fig. 5 represents a third embodiment of the present invention. A valve body 32 of a directional control valve 31 in the third embodiment comprises a supply port 33, an output port 34, and a discharge port 35 for compressed air opened on a side as in the first embodiment, while a supply hole 36, a pilot port PP and a discharge hole 37 are opened on the opposite side of the valve body 32. The supply hole 36 is directly communicated with the supply port 33 through a supply passage 36a and a valve bore 38a. The pilot port PP is communicated with a pilot chamber 39 through a pilot passage 39a, and the discharge hole 37 is directly communicated with the discharge port 35 through a discharge passage 37a and a valve bore 38b.

The other arrangement of the third embodiment is the same as the first embodiment. Thus, the same component as in the first embodiment is referred by the same symbol, and detailed description is not given here.

As to be described later, the directional control valve 31 of the third embodiment is advantageous in that a pilot solenoid valve is mounted on a surface where a supply hole 36, a pilot port PP and a discharge hole 37 are formed and a fluid pressure equipment mounted on the surface where the supply port 33, the output port 34 and the discharge port 35 are formed is driven by a pressure fluid, whose flow rate is increased by the directional control valve 31.

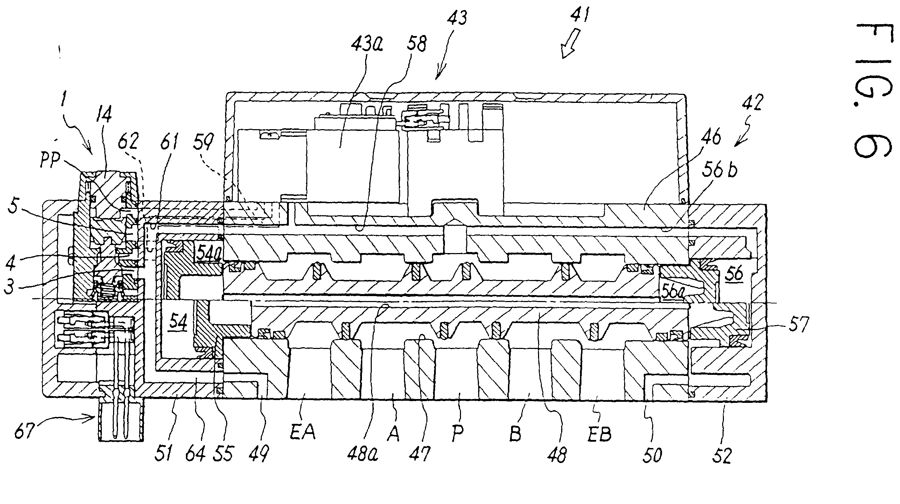

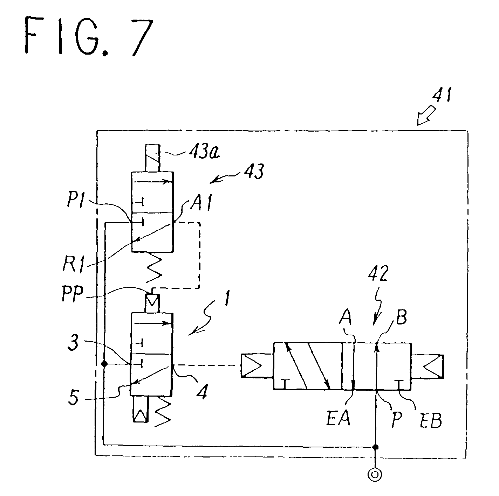

Fig. 6 and Fig. 7 each represents an example of an operating aspect of the directional control valve 1 of the first embodiment.

In this operating aspect, the directional control valve 1 is utilized on a pilot valve 41. The directional control valve 1 is opened or closed by pilot fluid from a pilot solenoid valve 43, which is small in capacity and low in power consumption, and its output is supplied to or discharged from a main valve pilot chamber of a main valve 42 having large capacity.

A valve main unit 46 of the main valve 42 in this pilot valve 41 is installed on a mainfold base (not shown), and the directional control valve 1 is mounted on one side in axial direction of the main valve 42, and the pilot solenoid valve 43 is mounted on upper surface of the valve main unit 46.

The valve main unit 46 comprises a main valve supply port P, main valve output ports A and B and a valve bore 47 running in axial direction having main valve discharge ports EA and EB and with these ports opened on it. Into the valve bore 47, a valve disc 48 for switching over and communicating main valve output ports A and B with the main valve discharge ports EA and EB is slidably inserted. On lower surface of the valve main unit 46, an external pilot port 49 and a breather port 50 are provided in addition to the above ports.

The main valve 42 and the manifold base are arranged in such manner that, when the valve main unit 46 is installed on the manifold base, the ports provided on lower surface of the valve main unit 46 are communicated with the corresponding ports on the manifold base.

On one end in axial direction of the valve main unit 46, a first piston box 51 and a second piston box 52 are mounted. A first piston 55 is slidably inserted into a main valve pilot chamber 54 formed in the first piston box 51, and a second piston 57 is slidably inserted into a return pressure chamber 56, which is formed in the second piston box 52 and has smaller pressure receiving area than that of the main valve pilot chamber 54. A valve disc 48 is pushed by these pistons 55 and 57 to slide. On the valve disc 48, a through-hole 48a is formed in axial direction for communicating breather chambers 54a and 56a behind the first piston 55 and the second piston 57, and the return pressure chamber 56 is communicated with the main valve supply port P by a flow passage 56b.

The pilot solenoid valve 43 as schematically shown in Fig. 6 comprises a first pilot supply port P1, a first pilot output port A1, and a first pilot discharge port R1 as shown by symbol marks in Fig. 7. It is designed as a 3-port solenoid valve of known type, which is operated by excitation and release of a solenoid 43a to switch over the first pilot output port A1 to the first pilot supply port P1 and the first pilot discharge port R and to communicate them with each other.

The first pilot supply port P1 is communicated with a main valve supply port P via a first pilot supply passage 58 formed on the valve main unit 46, and the first pilot output port A1 is communicated with the pilot port PP of the directional control valve 1 via a first pilot output passage 59. The first pilot discharge port R1 is communicated with a breather chamber 54a via a passage (not shown) and is communicated with outside via a through-hole 48a, the breather chamber 56a and the breather port 50.

The supply port 3 of the directional control valve 1 is communicated with the main valve supply port P via a second pilot supply passage 61 communicated with the first pilot supply passage 58, and the output port 4 is communicated with the main valve pilot chamber 54 via a second pilot output passage 62. The discharge port 5 is communicated with the breather chamber 54a via a passage (not shown) and is communicated with outside via the through-hole 48a, the breather chamber 56a and the breather port 50 of the valve disc 48.

The directioinal control valve 1 is designed in such capacity that a large quantity of pilot air can be supplied within short time to the main valve pilot chamber 54 of the main valve 42 having large capacity, and it is mounted on a side of the first piston box 51 with the manual operating member 14 facing upward.

The external pilot port 49 provided on the valve main unit 46 is communicated with the second pilot supply passage 61 via an external pilot passage 64. Therefore, the pilot valve 41 may be designed as internal pilot type or external pilot type as necessary.

In case it is designed as internal pilot type, the external pilot port 49 should be closed by adequate means such as a ball (not shown). In case it is designed as external pilot type, it is necessary to block the communication of the main valve supply port P of the main valve 42 with the first pilot supply passage 58 and the passage 56b.

On the lower portion of the directional control valve 1, a power feeding unit 67 for feeding power to the solenoid 43a of the pilot solenoid valve 43 is mounted. The power feeding unit 67 is electrically connected to a terminal of the solenoid 43a of the pilot solenoid valve 43 through a lead wire (not shown), and it is electrically connected with a power feeding terminal on the manifold base when the main valve 42 is installed on a manifold base.

In this pilot operated valve 41, when the solenoid 43a of the pilot solenoid valve 43 is not excited, the pilot air pressure is not supplied to the pilot port PP of the directional control valve 1, and the pilot air in the main valve pilot chamber 54 is discharged to outside through the discharge port 5. Thus, the valve disc 48 is moved leftward in the figure by action of the air pressure in the return pressure chamber 56. As a result, the main valve supply port P is communicated with the main valve output port B, and the main valve output port A is communicated with the main valve discharge port EA. (See upper half of the valve disc 48 in Fig. 6.)

When the solenoid 43 of the pilot solenoid valve 43 is excited by the power feeding unit 67, the first pilot output port A1 is communicated with the first pilot supply port P1, and pilot air is supplied to the pilot port PP of the directional control valve 1. As a result, the output port 4 is communicated with the supply port 3, and the pilot air is supplied to the main valve pilot chamber 54. Therefore, due to the difference of pressure receiving area between the main valve pilot chamber 54 and the return pressure chamber 56, the first piston 55 is moved rightward in the figure and pushes the valve disc 48. Thus, the main valve supply port P is communicated with the main valve output port A, and the main valve output port B is communicated with the main valve discharge port EB. (See lower half of the valve disc 48 in Fig. 6.)

When excitation of the solenoid 43a is released, the first pilot output port A1 of the pilot solenoid valve 43 is communicated with the first pilot discharge port R1, and the air in the pilot port PP of the directional control valve 1 is discharged to outside. As a result, the valve discs 10 and 11 are restored to initial positions by resilient force of the valve springs, and the output port 4 is communicated with the discharge port 5. The pilot air in the main valve pilot chamber 54 is discharged to outside, and the valve disc 48 is moved back to the initial position by the air pressure in the return pressure chamber 56 applied on the second piston 57.

The communication between the ports by the valve disc 48 of the main valve 42 is switched over by a large quantity of pilot air corresponding to the volume of the pilot chamber supplied to the main valve pilot chamber 54 from the directional control valve 1. Accordingly, even when the pilot solenoid valve 43 is small in size and low in power consumption, the main valve 42 is operated with good response. This contributes to the operation of the directional control valve 1 at lower cost and also to the use of the pilot operated solenoid valve 41 with good response and at lower cost.

In the above, description has been given on the case where the directional control valve 1 is assembled on a pilot operated solenoid valve 41 and is used, while the directional control valve of the present invention is not limited to such operating aspects.

The directional control valve 31 of the third embodiment as shown in Fig. 5 is suitable for the operation where the pilot solenoid valve 43 of the pilot operated valve 41 as described in connection with Fig. 6 is mounted on a surface where the supply hole 36, the pilot port PP and the discharge hole 37 are opened in the directional control valve 31. Therefore, similarly to the pilot solenoid valve 43, the pilot solenoid valve 70 of Fig. 5 comprises a first pilot supply port P1, a first pilot output port A1, and a first pilot discharge port R1, and the first pilot output port A1 is switched over to the first pilot supply port P1 and the first pilot discharge port R and is communicated with these ports by excitation and release of the solenoid 70a.

It is possible according to the poppet type directional control valve of the present invention to manufacture the valve, in which molding of valve body and molding and assembling of valve disc can be carried out in simple and easy manner at lower cost.

Specifically, the valve disc of poppet type can be designed in very simple manner because there is no need to mount poppet type sealing member on a flange, which is formed by cutting or fitting on a valve rod. The molding and the assembling can be carried out in simple and easy manner because the valve discs are made of a material having elasticity and sealing property.

According to the present invention, there is no need to insert a piston for switching over and driving the valve disc into a pilot chamber, and it is possible to provide a poppet type directional control valve with fewer number of processes in the assembling procedure.

## Claims

1. The poppet type directional control valve, comprising a supply port (3,33) for pressure fluid opened to a valve bore (6) where a valve disc (10,11,23) is inserted, an output port (4,34) opened to said valve bore (6) and with communication to said supply port (3,33) blocked by switchover operation of the valve disc (10,11,23), a discharge port (5,35) opened to said valve bore (6) and being communicated with the output port (4,34) when communication between said supply port (3,33) and said output port (4,34) is blocked, and a pilot port (PP) opened to pilot chamber (9,39) at one end of said valve bore (6), whereby a first valve seat (7) and a second valve seat (8) are provided between the supply port (3,33) and the output port (4,34) and between the output port (4,34) and the discharge port (5,35) in said valve bore (6), and these components are integrated as a valve body (2,22,32);
in which the valve disc is a poppet type valve disc (10,11,23) inserted into said valve bore (6) and used for opening and closing the first valve seat (7) and the second valve seat (8), and said valve disc (10,11,23) is switched over and driven by pilot fluid pressure supplied from or discharged to the pilot chamber (9,39) to open or close the first valve seat (7) and the second valve seat (8);
the valve bore (6) of said valve body (2,22,32) comprises a first valve bore (6a) formed from one end in axial direction of the valve body (2,22,32) via an opening of the supply port (3,33) toward the first valve seat (7) a second valve bore (6b) formed from the other end in axial direction of the valve body (2,22,32) via the pilot chamber (9,39) and an opening of the discharge port (5,35) toward the second valve seat (8), and a communicating valve bore (6c) located between the first valve seat (7) and the second valve seat (8) positioned back-to-back to each other, formed from the first valve bore (6a) and the second valve bore (6b) via the opening of the output port (4,34) and for communicating these valve bores (6a,6b);
said poppet type valve disc (10,11,23) comprises a first valve disc (10) inserted into the first valve bore (6a) and used for opening and closing the first valve seat (7) and a second valve disc (11,23) inserted through the second valve bore (6b) and connected integrally with the first valve disc (10) to open or close the second valve seat (8), characterised in that:
the first and second valve discs (10,11,23) are made of a material having elasticity and sealing property, each of the valve discs (10,11,23) being moulded integrally;
in that said pilot chamber (9,39) is formed between the second valve disc (11,23) airtightly inserted into the second valve bore (6b) and a closing member (14) for closing an opening of the second valve bore (6b);
in that the first valve bore (6a) is formed without the diameter being enlarged from the one end of the valve body (2,22,32) towards the first seat (7);
in that the second valve bore (6b) is formed without the diameter being enlarged from the other end of the valve body (2,22,32) towards the second seat (8);
in that the communicating valve bore (6c) is formed without the diameter being enlarged in a direction from the first valve seat (7)towards the second valve seat (8);
in that the inner diameter D1 of the second valve bore (6b) is greater than the diameter D2 of the first valve seat (7);
in that the diameter D2 of the first valve seat (7) is greater than the diameter D3 of the second valve seat (8); and,
in that the valve discs (10,11,23) co-operate directly with the valve bore (6) and the valve seats (7,8) integrated therein.

2. A poppet type directional control valve according to Claim 1, wherein a guide (19,23f) for guiding the second valve disc (11,23) to move in the second valve bore (6b) is integrally provided on the second valve bore (6b) or the second valve disc (11).

3. A poppet type directional control valve according to Claims 1 or 2, wherein the closing member for closing the opening of the second valve bore (6b) is formed by a manual operating member (14) for switching over and driving the valve disc (10,11,23) by pressure from outside.

4. A poppet type directional control valve according to any one of Claims 1 to 3, wherein the supply port (33), and output port (34) and a discharge port (35) for pressure fluid are formed on one side of the valve body (32), and a supply hole (36) and a discharge hole (37) directly communicated with the supply port (33) and the discharge port (35) and a pilot port (PP) communicated with the pilot chamber (39) are formed on the opposite side of the valve body (32).

## Patentansprüche

1. Teller-Wegeventil mit einem Zufuhranschluß (3,33) für ein Druckfluid, der zu einer Ventilbohrung (6) geöffnet ist, wo ein Ventilteller (10,11,23) eingesetzt ist, einem Ausgangsanschluß (4,34), der zur Ventilbohrung (6) geöffnet ist und in Verbindung mit dem Zufuhranschluß (3,33) steht, der durch eine Umschaltoperation des Ventiltellers (10,11,23) gesperrt wird, einem Ablaßanschluß (5,35), der zur Ventilbohrung (6) geöffnet ist und mit dem Ausgangsanschluß (4,34) verbunden wird, wenn die Verbindung zwischen dem Zufuhranschluß (3,33) und dem Ausgangsanschluß (4,34) gesperrt ist, und einem Vorsteueranschluß (PP), der zu einer Vor steuerkammer (9,39) an einem Ende der Ventilbohrung (6) geöffnet ist, wodurch ein erster Ventilsitz (7) und ein zweiter Ventilsitz (8) zwischen dem Zufuhranschluß (3,33) und dem Ausgangsanschluß (4,34) und zwischen dem Ausgangsanschluß (4,34) und dem Ablaßanschluß (5,35) in der Ventilbohrung bereitgestellt werden, und diese Komponenten als ein Ventilkörper (2,22,32) integriert werden;
in dem der Ventilteller ein Tellerventilteller (10,11,23) ist, der in die Ventilbohrung (6) eingesetzt ist und zum Öffnen und Schließen des ersten Ventilsitzes (7) und des zweiten Ventilsitzes (8) verwendet wird, und der Ventilteller (10,11,23) durch einen Vorsteuerfluiddruck umgeschaltet und angetrieben wird, der aus der Vorsteuerkammer (9,39) zugeführt oder in sie abgelassen wird, um den ersten Ventilsitz (7) und den zweiten Ventilsitz (8) zu öffnen oder zu schließen;
die Ventilbohrung (6) des Ventilkörpers (2,22,32) aufweist: eine erste Ventilbohrung (6a), die von einem Ende in axiale Richtung des Ventilkörpers (2,22,32) über eine Öffnung des Zufuhranschlusses (3,33) zum ersten Ventilsitz (7) hin ausgebildet ist, eine zweite Ventilbohrung (6b), die vom anderen Ende in axiale Richtung des Ventilkörpers (2,22,32) über die Vorsteuerkammer (9,39) und eine Öffnung des Ablaßanschlusses (5,35) zum zweiten Ventilsitz (8) hin ausgebildet ist, und eine kommunizierende Ventilbohrung (6c), die zwischen dem ersten Ventilsitz (7) und dem zweiten Ventilsitz (8) angeordnet ist, die Rücken an Rücken zueinander angeordnet sind, die von der ersten Ventilbohrung (6a) und der zweiten Ventilbohrung (6b) über die Öffnung des Ausgangsanschlusses (4,34) ausgebildet ist, um diese Ventilbohrungen (6a,6b) zu verbinden;
der Tellerventilteller (10,11,23) aufweist: einen ersten Ventilteller (10), der in die erste Ventilbohrung (6a) eingesetzt ist und zum Öffnen und Schließen des ersten Ventilsitzes (7) verwendet wird, und einen zweiten Ventilteller (11,23), der durch die zweite Ventilbohrung (6b) eingesetzt ist und integral mit dem ersten Ventilteller (10) verbunden ist, um den zweiten Ventilsitz (8) zu öffnen oder zu schließen, dadurch gekennzeichnet, daß: der erste und zweite Ventilteller (10,11,23) aus einem Material bestehen, das eine Elastizität und eine Dichtungseigenschaft aufweist, wobei jeder Ventilteller (10,11,23) integral geformt ist;
daß die Vorsteuerkammer (9,39) zwischen dem zweiten Ventilteller (11,23), der luftdicht in die zweite Ventilbohrung (6b) eingesetzt ist, und einem Verschlußglied (14) zum Schließen einer Öffnung der zweiten Ventilbohrung ausgebildet (6b) ist,
daß die erste Ventilbohrung ausgebildet (6a) ist, ohne daß der Durchmesser vom einen Ende des Ventilkörpers (2, 22,32) zum ersten Sitz (7) hin vergrößert ist;
daß die zweite Ventilbohrung (6b) ausgebildet ist, ohne daß der Durchmesser vom anderen Ende des Ventilkörpers (2,22,32) zum zweiten Sitz (8) hin vergrößert ist;
daß die kommunizierende Ventilbohrung (6c) ausgebildet ist, ohne daß der Durchmesser in eine Richtung vom ersten Ventilsitz (7) zum zweiten Ventilsitz (8) hin vergrößert ist,
daß der Innendurchmesser D1 der zweiten Ventilbohrung (6b) größer als der Durchmesser D2 des ersten Ventilsitzes (7) ist,
daß der Durchmesser D2 des ersten Ventilsitzes (7) größer, als der Durchmesser D3 des zweiten Ventilsitzes (8) ist, und
daß die Ventilteller (10,11,23) direkt mit der Ventilbohrung (6) und den darin integrierten Ventilsitzen (7,8) zusammenwirken.

2. Teller-Wegeventil nach Anspruch 1, wobei eine Führung (19,23f) zur Führung des zweiten Ventiltellers (11,23), um sich in der zweiten Ventilbohrung (6b) zu bewegen, integral an der zweiten Ventilbohrung (6b) oder dem zweiten Ventilteller (11) vorgesehen ist.

3. Teller-Wegeventil nach Anspruch 1 oder 2, wobei das Verschlußglied zum Schließen der Öffnung der zweiten Ventilbohrung (6b) durch ein manuelles Betätigungsglied (14) zum Umschalten und Antreiben des Ventiltellers (10,11,23) durch Druck von außen gebildet wird.

4. Teller-Wegeventil nach einem der Ansprüche 1 bis 3, wobei der Zufuhranschluß (33) und der Ausgangsanschluß (34) und ein Ablaßanschluß (35) für ein Druckfluid an einer Seite des Ventilkörpers (32) ausgebildet sind, und eine Zufuhrbohrung (36) und eine Ablaßbohrung (37), die direkt mit dem Zufuhranschluß (33) und dem Ablaßanschluß (35) verbunden sind, und ein Vorsteueranschluß (PP), der mit der Vorsteuerkammer (39) verbunden ist, auf der gegenüberliegenden Seite des Ventilkörpers (32) ausgebildet sind.

## Revendications

1. Vanne de commande directionnelle de type à champignon, comportant un orifice d'alimentation (3, 33) pour du fluide sous pression ouvert vers un alésage de vanne (6) où est inséré un disque de vanne (10, 11, 23), un orifice de sortie (4, 34) ouvert vers ledit alésage de vanne (6) et ayant sa communication avec ledit orifice d'alimentation (3, 33) bloquée par une manoeuvre de commutation du disque de vanne (10, 11, 23), un orifice d'évacuation (5, 35) ouvert vers ledit alésage de vanne (6) et communiquant avec l'orifice de sortie (4, 34) lorsque la communication entre ledit orifice d'alimentation (3, 33) et ledit orifice de sortie (4, 34) est bloquée, et un orifice pilote (PP) ouvert vers une chambre pilote (9, 39) au niveau d'une première extrémité dudit alésage de vanne (6), de sorte qu'un premier siège de vanne (7) et un second siège de vanne (8) sont fournis entre l'orifice d'alimentation (3, 33) et l'orifice de sortie (4, 34), et entre l'orifice de sortie (4, 34) et l'orifice d'évacuation (5, 35), dans ledit alésage de vanne (6), ces composants étant en un seul bloc sous la forme d'un corps de vanne (2, 22, 32),
dans lequel le disque de vanne est un disque de vanne de type champignon (10, 11, 23) inséré dans ledit alésage de vanne (6) et utilisé pour l'ouverture et la fermeture du premier siège de vanne (7) et du second siège de vanne (8), et ledit disque de vanne (10, 11, 23) est commuté et entraîné par une pression de fluide pilote alimentée vers la chambre pilote (9, 39) ou évacuée de celle-ci pour ouvrir ou fermer le premier siège de vanne (7) et le second siège de vanne (8),
l'alésage de vanne (6) dudit corps de vanne (2, 22, 32) comporte un premier alésage de vanne (6a) formé à partir d'une première extrémité dans la direction axiale du corps de vanne (2, 22, 32) via une ouverture de l'orifice d'alimentation (3, 33) vers le premier siège de vanne (7), un second alésage de vanne (6b) formé à partir de l'autre extrémité dans la direction axiale du corps de vanne (2, 22, 32) via la chambre pilote (9, 39), et une ouverture de l'orifice d'évacuation (5, 35) vers le second siège de vanne (8), et un alésage de vanne de communication (6c) positionné entre le premier siège de vanne (7) et le second siège de vanne (8) positionnés dos à dos l'un par rapport à l'autre, formé à partir du premier alésage de vanne (6a) et du second alésage de vanne (6b) via l'ouverture de l'orifice de sortie (4, 34) et destiné à mettre en communication ces alésages de vanne (6a, 6b),
ledit disque de vanne de type à champignon (10, 11, 23) comporte un premier disque de vanne (10), inséré dans le premier alésage de vanne (6a) et utilisé pour l'ouverture et la fermeture du premier siège de vanne (7), et un second disque de vanne (11, 23), inséré à travers le second alésage de vanne (6b) et connecté en un seul bloc avec le premier disque de vanne (10) pour ouvrir ou fermer le second siège de vanne (8),
caractérisé en ce que :
les premier et second disques de vanne (10, 11, 23) sont constitués d'un matériau ayant une propriété d'élasticité et d'étanchéité, chacun des disques de vanne (10, 11, 23) étant moulé en un seul bloc,
ladite chambre pilote (9, 39) est formée entre le second disque de vanne (11, 23) inséré de manière étanche à l'air dans le second alésage de vanne (6b) et un élément de fermeture (14) destiné à la fermeture et l'ouverture du second alésage de vanne (6b),
le premier alésage de vanne (6a) est formé sans que le diamètre ne soit agrandi à partir de la première extrémité du corps de vanne (2, 22, 32) vers le premier siège (7),
le second alésage de vanne (6b) est formé sans que le diamètre ne soit agrandi à partir de l'autre extrémité du corps de vanne (2,22,32) vers le second siège (8),
l'alésage de vanne de communication (6c) est formé sans que le diamètre ne soit agrandi dans une direction allant du premier siège du vanne (7) vers le second siège du vanne (8),
le diamètre intérieur D1 du second alésage de vanne (6b) est supérieur au diamètre D2 du premier siège de vanne (7),
le diamètre D2 du premier siège de vanne (7) est supérieur au diamètre D3 du second siège de vanne (8), et
les disques de vanne (10,11,23) coopèrent directement avec l'alésage de vanne (6) et les sièges de vanne (7,8) intégrés dans celui-ci.

2. Vanne de commande directionnelle de type à champignon selon la revendication 1, dans laquelle un guide (19, 23f) pour guider le second disque de vanne (11, 23) pour le déplacer dans le second alésage de vanne (6b) est fourni en un seul bloc sur le second alésage de vanne (6b) ou le second disque de vanne (11).

3. Vanne de commande directionnelle de type à champignon selon la revendication 1 ou 2, dans laquelle l'élément de fermeture destiné à fermer l'ouverture du second alésage de vanne (6b) est formé par un élément à actionnement manuel (14) destiné à commuter et à entraîner le disque de vanne (10, 11, 23) par une pression provenant de l'extérieur.

4. Vanne de commande directionnelle de type à champignon selon l'une quelconque des revendications 1 à 3, dans laquelle l'orifice d'alimentation (33), l'orifice de sortie (34) et un orifice d'évacuation (35) pour du fluide sous pression sont formés sur un premier côté du corps de vanne (32), et un trou d'alimentation (36) et un trou d'évacuation (37), qui communiquent directement avec l'orifice d'alimentation (33) et l'orifice d'évacuation (35), et un orifice pilote (PP), mis en communication avec la chambre pilote (39), sont formés sur le côté opposé du corps de vanne (32).
